# EUROPEAN PATENT APPLICATION

(11) **EP 3 744 662 A1**
(43) Date of publication of application: **02.12.2020**
(21) Application number: 20176927.0
(22) Date of filing: 27.05.2020
(51) Int. Cl.: B65G 13/04, B65G 37/00, B65G 57/24, B65G 57/06

(54) **ASSEMBLY FOR TRANSFERRING LOADS**

(30) Priority: 27.05.2019 IT 201900007335
(71) Applicant: Elettric 80 S.p.A., 42030 Viano, Reggio Emilia (IT)
(72) Inventor: GUIDI, Roberto, 42030 Viano (Reggio Emilia) (IT); PESCINI, Erminio, 42030 Viano (Reggio Emilia) (IT)
(74) Representative: Feltrinelli, Secondo Andrea

(57) **Abstract**

A group (1) for transferring loads comprises a first support structure (2) with a main frame (3) with a roller conveyor (4) with a plurality of rollers (4a, 4b) substantially parallel to each other and with an axis (x-x) of predetermined main development, the rollers (4a, 4b) having ends supported rotatable by the frame (3), so that a lower tunnel (LT) is delimited under the plurality of rollers (4a, 4b), a device for driving the rollers comprises at least one motor (5) kinematically connected to the rollers (4a, 4b), a second structure (6) or a pallet or a support (PA) for the loads, and a control group (7) for the drive means (5), the first support structure (2) and/or the pallet or support (PA) comprise a first moving apparatus (15) for moving the first supporting structure (2) and/or a second moving apparatus (15a) to move the second support structure (6), or said pallet or support (PA), whereby the first structure of support (2) and/or the second support structure (6), or the pallet or support (PA), can be moved relative to each other so as to determine the insertion or extraction of the second support structure (6), or of the pallet or support (PA), in or from the lower tunnel (LT) for the transfer of loads between them (2, 6, PA).

## Description

### TECHNICAL FIELD OF THE INVENTION

The present invention relates to a group for transferring loads, in particular a loading unit comprising packages of finished products intended directly for the market or auxiliary materials for production plants.

### PRIOR ART

In production plants, both those destined for consumer goods and those destined for the production of auxiliary materials, there is an ever increasing need to combine different loading units, i.e. the set of packages of products, with different types of supports for being able to adapt production to different markets and/or customers. There may also be the possibility of combining different products within the same loading unit in order to reduce the minimum supply batch of a specific product. Currently the solutions to the problem posed by this need for flexibility are different, presenting in any case limitations.

A first solution consists in making machines, mainly palletizers and conveyors, capable of treating all types of supports potentially present, but this solution increases the complexity of the machines and in some cases penalizes their performance.

An alternative consists of a solution that provides the handling of the loading units without support, conforming the lower part of the loading unit so that it can be directly moved on conveyors and picked up by forklift trucks. However, this solution is limited to a very restricted area, that is, only to applications where the type of packages allows this type of treatment. Typically, these are cases in which the packages are made up of bags with appropriate characteristics.

Another alternative is to move the loading units without pallets inside the production plants up to the final storage and shipping operations before which the necessary supports are associated with the loading units.

The technical solutions currently available in this case, however, limit their application to only the types of packages that allow this treatment, i.e. packages consisting of blanks, layers or in general products with high stability and without the risk of interlocking between the packages during the union operation between the loading unit and its support.

In the patent application EP3450362A1, in the name of the same applicant, is described a device for loading a group of products on a pallet comprising a conveyor for the group of products, a support for the pallet, a roller platform which receives and supports the group of products from the conveyor. In turn, the platform with the group of products starting from a first position in which it receives the group of products from the conveyor can move to a second position superimposed on the support for the pallet, with the pallet itself resting on the support. The roller platform is then able to deposit the group of products on the pallet, returning to the first position and with an active rotation of the rollers opposite to the movement of the platform. To keep the group of products in the correct position, containment walls are also provided which are selectively placed in contact with the lateral surfaces of the group of products.

In the patent application JP2018030680A another transfer device for picking up or unloading articles is illustrated comprising a main frame within which a mobile table moves between a waiting position and an extended position for loading or unloading the articles. The table includes a surface on the upper side equipped with a conveyor with a plurality of first rollers and a surface on the lower side with second idle or counter-rotating rollers to the first rollers to reduce the resistance when the table is between two layers of articles, furthermore it is a rotating head roller of smaller diameter is provided to facilitate insertion of the table between two layers of articles in the case of depalletizing the load of articles on the pallet.

The table can also pick up a layer of articles from an external conveyor and deposit the same layer on a pallet or on other layers of articles that are forming a palletized load; in all the embodiments, the device treats only one layer of articles at a time due to the structure and construction of the table which transfers the articles. The table has a cantilevered sliding structure that is not able to support high loads and in practice can carry only one layer of the palletized load.

### OBJECTS OF THE INVENTION

An object of the present invention is to provide a new group for transferring loads.

Another object of the present invention is to provide a new group for transferring loads which allows to move even complete loading units, consisting of several layers of overlapping packages, as well as to deposit them on a support of any type, as well as to deposit them on another loading unit.

Another object of the present invention is to provide a new group for transferring loads which is capable of treating any loading unit, without limitations on the weights, dimensions, palletizing scheme and characteristics of the treated packages. Another object of the present invention is to provide a new group for transferring loads which is able to reduce both the jolts of the loading units during handling, and instability or jamming between packages during the deposit of the loading unit on a respective support.

According to an aspect of the present invention, a group according to claim 1 is provided.

According to another aspect of the present invention, a method for transferring loads according to claim 16 is provided.

The dependent claims refer to preferred and advantageous embodiments of the invention.

Further features and advantages of the invention shall be more apparent from the description of an embodiment of a group for transferring loads, illustrated by way of example in the attached drawings wherein:
figures 1 and 2 are perspective views slightly from above and from respective sides of the group according to the present invention;
figure 3 is a top view of part of the group of figure 1;
figures 4 to 10 are views of details on an enlarged scale of the group of Figure 1;
figures 11 and 12 are perspective views slightly from above of examples of embodiments of the group according to the present invention;
figures 14-16 are perspective views slightly from above and from respective sides of other embodiments of the group according to the present invention;
figure 17 is a schematic perspective view of an alternative embodiment of the group of figure 1;
figure 18 is a schematic perspective view of a detail of the embodiment according to a different version;
figures 19 and 20 are front and side views respectively of details of the embodiment of the previous figure;
figures 21 and 22 are front and side views respectively of details of another version of the embodiment of figure 17;
figure 23 is a schematic perspective view of another alternative embodiment of the group of figure 1;
figures 24 and 25 are respectively top and side views of details of the embodiment shown in figure 22; and
figure 26 is a top view of another example of construction of the group referred to in the previous figures.

In the attached drawings equal parts or components are marked by the same reference numbers.

### EMBODIMENTS OF THE INVENTION

In the present invention, loading unit means the set of packages of finished products, both those intended directly for the market and those intended as auxiliary materials to production plants, grouped in such a way as to optimize volumes according to transport and ensure the stability needed.

By support we mean instead an element used to support the loading unit during handling operations both inside the production plants and outside up to large-scale distribution. The support can consist of a pallet of different shapes, sizes and materials, a so-called slip-sheet or, in general, elements that have characteristics that perform the function of supporting and handling the loading unit.

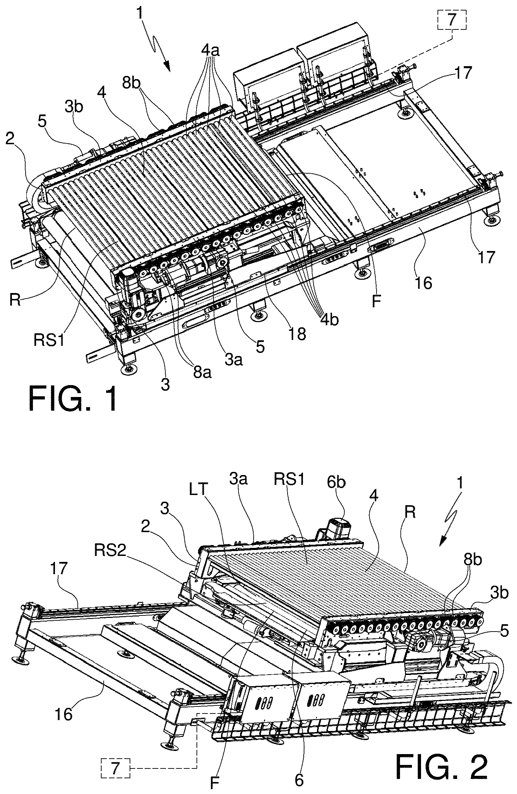

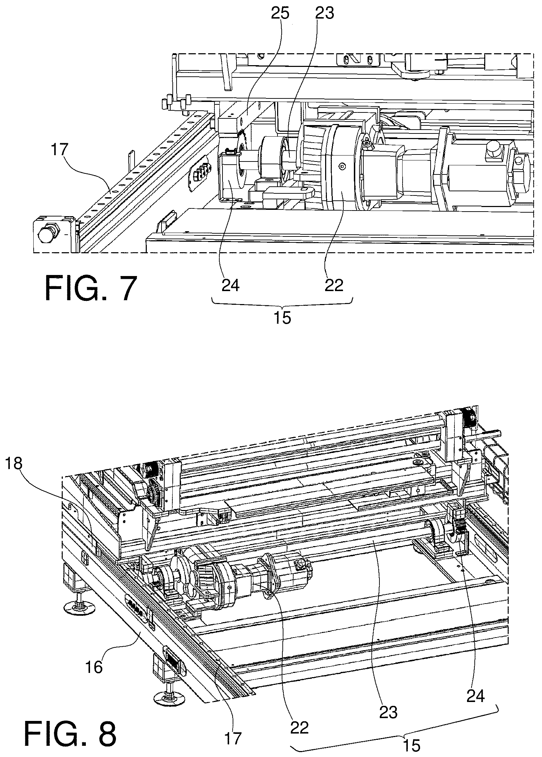

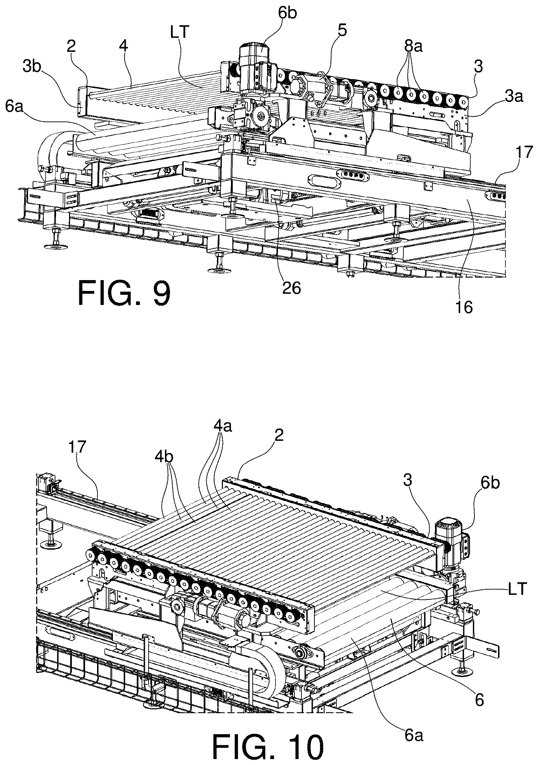

With reference first to figures 1 to 12, a group for transferring loads 1 has been illustrated comprising a first supporting structure 2 with a main frame 3 having two sides 3a, 3b and with a roller conveyor 4 including a plurality of rollers 4a, 4b substantially parallel to each other and with a predetermined main development axis x-x, in particular the roller development axis x-x is arranged in a direction which substantially goes from one side 3a to the other side 3b, according to a version of the present invention the axis of development x-x is substantially perpendicular to the sides 3a, 3b.

The rollers 4a, 4b can also all be of the same size and at the same level from the ground; the rollers 4a, 4b have ends supported rotatably each by a respective side 3a, 3b of the frame 3 so that, under the plurality of rollers 4a, 4b and between the two sides 3a, 3b, a lower tunnel LT is delimited, which can pass through.

The group 1 comprises rotational drive means for the rollers 4a, 4b including at least one main motor 5 and, according to a version of the present invention, at least two motors 5 kinematically connected to the rollers 4a, 4b. The motor or motors 5 can comprise motors of any type, for example electric, for example with a suitable gearmotor. The motor 5 or each motor 5 can have an output shaft with an axis substantially parallel to the direction from one side 3a to the other side 3b.

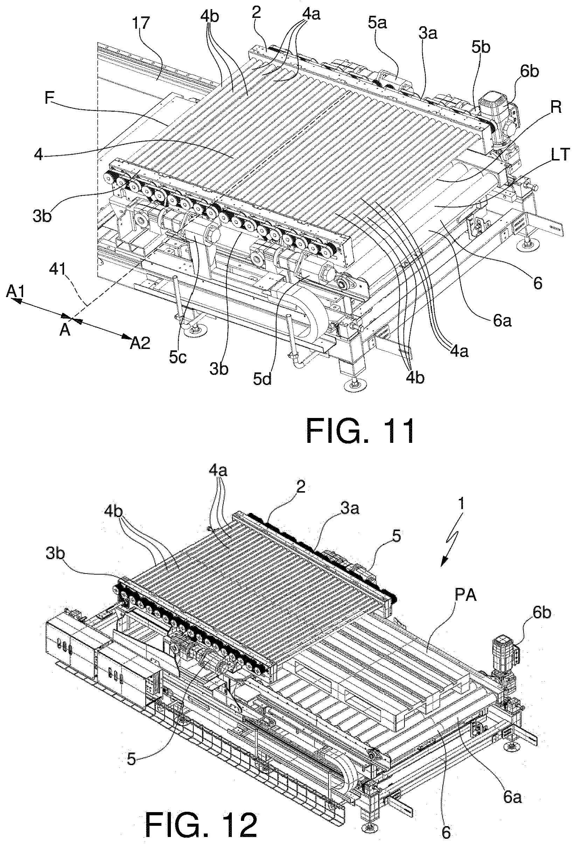

The group 1 comprises a pallet or support PA of loads (figures 12, 14-16), for example supported or sustained by a second support structure 6 and also a control group 7 of the drive means 5. If it is not provided a second support structure 6, then the pallet or support PA can be positioned directly on the ground.

The control group 7 can also suitably control the various components, for example and in particular to operate the rollers in rotation with the suitable speed and direction of rotation.

The first support structure 2 and the pallet, or the support PA, are also movable in a relative way, so as to determine the insertion or extraction of the pallet or support PA or, if provided, the insertion or extraction of the second structure support 6 supporting the pallet or support PA in/from the lower tunnel LT for the transfer of loads between the first support structure 2 and the pallet or support PA.

This relative displacement occurs along a direction orthogonal to the rotation axis of the rollers 4a, 4b, for example according to a horizontal direction.

On the basis of this relative displacement, the first support structure 2 and the pallet, or the support PA, or the first support structure 2 and the second support structure 6, are moved relatively between a first position and a second position.

The first position is the position wherein the first support structure is not superimposed on the pallet or on the support PA or on the second support structure 6, i.e. when the second support structure 6 (or the support PA) is outside the lower tunnel LT.

The second position is the position in which the first support structure 2 is at least partially superimposed on the pallet or on the support PA or on the second support structure 6 bearing the respective pallet or support PA, i.e. when the second support structure 6 (or the support PA) it is at least partially inside the tunnel LT and under the roller conveyor 4.

As will be better explained below, the roller conveyor 4 is made in such a way as to unload the group of product packages or loading units onto the pallet or support PA by falling or sliding, following the translation from the second position to the first position.

The roller conveyor 4 defines a first support surface RS1, which is an ideal surface, if desired flat and horizontal, of the loading unit or group of product packages, thanks to which it is possible to translate and then remove the roller conveyor 4 with respect to the base of the loading unit so that the loading unit rests on the pallet or support PA falling from a minimum height difference (of the order of a few centimeters, as will be better explained below).

If a second support structure 6 is provided for the pallet or support PA, then the second support structure 6 defines a second support surface RS2, which is also an ideal surface, for the pallet or support PA, also the second support surface RS2 is, if desired, flat and horizontal.

According to a version of the present invention, the movement of the roller conveyor 4 is combined with a suitable rotary motion imparted to the rollers 4a, 4b. This rotary motion is obtained by means of rotating drive means 5, the rollers 4a, 4b are driven with a rotary motion in the opposite direction to the movement of the roller conveyor 4, making the instantaneous speed of the parts of the rollers null - substantially the upper generators of the cylinders rollers - in contact with finished product packages. In this way, any friction between the surfaces of the parts involved is avoided, in particular friction on the surface of the finished product packages resting on the rollers 4a, 4b is avoided.

The drive means 5 are connected to the rollers 4a, 4b by means of motion transmission means. The aforesaid means of transmission of motion may include, for example, a plurality of pulleys or toothed wheels 8a, 8b, operated by respective belts or chains.

Each pulley or toothed wheel is keyed in rotation to a respective roller 4a, 4b, is rotatable outside the positioning area of the rollers 4a, 4b around a rotation axis corresponding to that x-x of the respective roller 4a, 4b and transmits the motion to the respective roller by the motor 5.

The group 1 can include a first plurality of pulleys (or toothed wheels) 8a mounted on the first side 3a, which rotate a respective first plurality of rollers 4a and a second plurality of pulleys (or toothed wheels) 8b mounted on the second side 3b, which rotate a respective second plurality of rollers 4b.

The rollers 4a of the first plurality alternate with the rollers 4b of the second plurality, that is, alongside the rollers 4a of the first plurality of rollers there are one or two rollers 4b of the second plurality of rollers and vice versa.

With reference to this aspect, the rollers 4a of the first plurality alternate with the rollers 4b of the second plurality in a direction orthogonal to the direction that goes from one side 3a to the other 3b or parallel to the direction of horizontal movement relative between the first support structure 2 and the pallet or support PA or between the first 2 and the second 6 support structure.

Thanks to the alternating configuration, the pulleys (or toothed wheels) 8a, 8b can have a larger diameter than that of the rollers 4a, 4b, while keeping the rollers very close to each other, i.e. with a pitch - or interaxis - slightly greater than the measurement of the diameter of the rollers themselves.

The possibility of having relatively small diameter rollers, with pulleys (or toothed wheels) for driving relatively large diameter rollers, leads to significant benefits:
the reduced diameter of the rollers 4a, 4b, and in particular the diameter of the rollers smaller than the diameter of the pulleys, allows to reduce the extent of the jump of the loading unit during deposit on the pallet or support;
the pulleys or toothed wheels 8a, 8b, connected to the rollers 4a, 4b, with relatively large diameter maintain a good degree of uniformity of rotation, in particular in the case of toothed wheels and chains, and can transmit a sufficient torque for the rotation of the rollers loaded, in the case of transmission with belts.

Each pulley or toothed wheel 8a, 8b therefore has a diameter, or external section, greater than the diameter, or external section, of the respective roller 4a, 4b to which it is keyed.

By way of non-limiting example, if the rollers 4a, 4b have a diameter of between about 20 mm. and about 40 mm., the pulleys, or toothed wheels, 8a, 8b can have a diameter of between about 30 mm. and about 100 mm.

Again, by way of non-limiting example, with rollers 4a, 4b having a diameter of 30 mm. and an interaxis between the rollers of 35 mm., the pulleys, or toothed wheels, 8a, 8b can have a diameter of up to about 65 mm.

In the event that at least two motors 5 are provided, each arranged at or on or outside a respective side 3a, 3b different from the other, each motor 5 is kinematically connected to the first plurality of rollers 4a or to the second plurality of rollers 4b, so that each roller is moved by only one of the two motors 5 or better a plurality of rollers 4a is moved by one or only one of the motors 5 and the other plurality of rollers 4a is moved by another of the at least two motors 5.

Each first roller 4a is adjacent and subsequent only to a second roller 4b or to second rollers 4b.

As said, the pitch between the rollers 4a, 4b is as small as possible, so as to reduce both the jolts of the loading unit during handling and the possible instability or jamming of the various packages during the deposit of the loading unit on the pallet or support, this jamming is, for example, possible when the necks have lateral protrusions, constituted for example by the edges of trays or caps.

As illustrated in the figures, the first pulleys 8a are located on a side 3a and are close to each other; each first pulley 8a transfers the motion from one motor or from first motors 5 to respective first rollers 4a, while the second pulleys 8b on the other side 3b are close to each other, staggered and/or in any case not aligned with the first pulleys 8a. Each second pulley 8b transfers the motion from a motor, which can be the same as the first pulleys 8a, or from a different motor or from second motors 5, to respective second rollers 4b alternating with the first rollers 4a.

According to the embodiment of the figures, the rollers 4a, 4b are kinematically connected, two by two, by means of respective belts or driving chains 10 - from here on we will mention only the belts without thereby wanting to limit themselves only to the use of these transmission components - and in this case on at least one pulley 8a, 8b, or on all the pulleys 8a, 8b, two belts or chains closed in a ring 10 are wound, offset from each other.

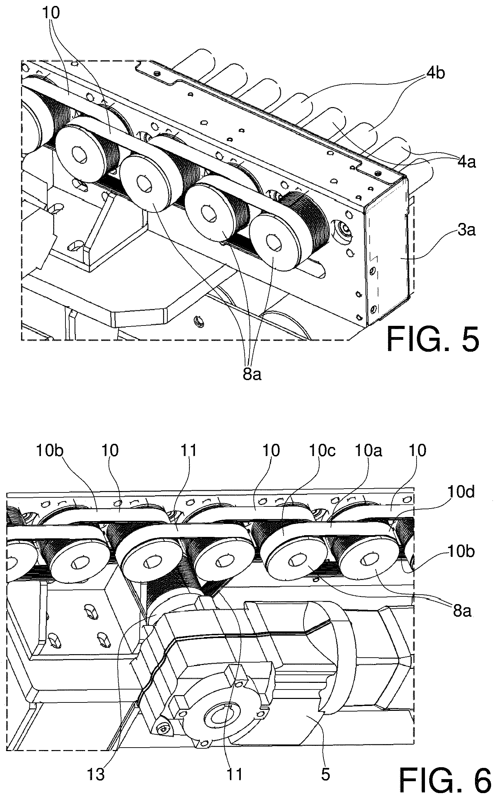

A belt 10 transfers the motion to a first pulley 8a, 8b, while the other belt is driven by the same pulley and transfers the motion imparted to it to an adjacent pulley 8a or 8b. In this case, each belt 10 (figure 6) has two main straight sections 10a, 10b substantially orthogonal to the rotation axis x-x of the rollers 4a, 4b and substantially parallel to the relative movement direction of the first support structure 2 with respect to the pallet or support PA, as well as two curved sections 10c, 10d for the connection of the main straight sections 10a, 10b, which sections 10c, 10d are substantially circumference arc-shaped with a center on the rotation axis x-x of the rollers 4a, 4b.

Moreover, on each or most of the pulleys 8a, 8b, the two belts 10 are wound in a staggered manner, so for example one belt is proximal to the respective side 3a, 3b and the other belt is distal from this last side 3a, 3b.

With reference to this aspect, according to the non-limiting example of embodiment shown in the figures, the first plurality of pulleys 8a and the second plurality of pulleys 8b comprises a series - for example from 4 to 18 or more, depending on the length of the roller conveyor 4 - of pulleys mounted close to each other on a first side 3a and second side 3b and more particularly mounted outside the positioning area of the rollers 4a, 4b rotatable around a rotation axis corresponding to the x-x axis of the respective roller.

Therefore the rollers 4a, 4b are actuated alternately on both sides thus allowing to maximize the diameters of the driving pulleys 8a, 8b, and consequently using driving elements of adequate dimensions, both for uniformity of motion (in the case of chain transmission), both for the transmission capacity of the torque (especially for belt transmission).

As mentioned above, the pulleys 8a arranged on one side must drive only a part or about half of the first rollers 4a, while the second rollers 4b, which make up the other part or half of the overall rollers - alternating with the first rollers 4a - are driven from the other pulleys 8b arranged on the other side.

Since the first rollers 4a are divided or separated from each other by a second roller 4b and vice versa, it follows that, even if the rollers 4a, 4b are small in size and overall very close together, it is possible to make the pulleys 8a, 8b larger than the rollers 4a, 4b, thus ensuring an external contact surface - for the transfer of motion from the motor/s to the pulleys 8a, 8b - rather large or in any case larger than the pulleys in traditional motorized roller conveyors.

According to other versions of the present invention not shown in the figures, the transmission system can be made with a driving by means of tangential chains 10, or chain ring systems could be used, or even by means of gear trains.

Even these systems could still make use of pulleys 8a, 8b with a larger diameter than those possible in case of one-sided actuation, guaranteeing better uniformity of the rotary motion and a better transmission capacity of the torque, therefore ultimately a high reliability of the group according to the present invention.

The reduced dimensions of the pitch or distance between rollers combined with the need to treat loading units with high masses, which for example can even reach 1500 kg, would not allow the reliable use of the normal roller drive devices arranged on one side of the roller conveyor, which could be subject to breakage, slipping, etc. Furthermore, also the support structure 2 and the frame 3 with the roller conveyor 4 are solidly built, with a bridge shape entirely supported in the area of the two sides 3a, 3b, avoiding cantilever structures that would not be able to support high loads. The transfer of motion from the motor or motors 5 to the pulleys 8a, 8b can also be carried out by means of belts or chains 11 (Figure 6). In this regard, the shaft or a transmission shaft of each motor 5 is connected to a secondary pulley 13 and drives in rotation the secondary pulley 13 which is in turn kinematically connected to one or two pulleys 8a or 8b, for example by means of a respective belt or chain 11.

With reference to the latter aspect, the driving belt 11 is looped around the secondary pulley 13 as well as two adjacent primary pulleys 8a or 8b, so as to drive the latter in rotation according to the rotation motion imparted to it by the secondary pulley 13. In this case, the belt or chain 11 can be wound around two primary pulleys 8a or 8b in intermediate or central positions relative to the respective plurality of pulleys, for a more uniform distribution of the torque deriving from the motor or motors 5 towards the pulleys 8a, 8b.

The two primary pulleys 8a or 8b are therefore driven directly by the belt 11 and each rotates a part - in particular a half for each side - of the respective plurality of pulleys 8a, 8b by means of the respective belts 10.

In this case, of course, the primary pulleys 8a, 8b on which the driving belt 11 is wound are not affected by two drive belts 10, but only by a drive belt 10. The secondary pulley 13 can be at a lower level of the primary pulleys 8a, 8b.

According to a further version of the present invention illustrated in figure 11, the group 1 comprises two motors 5 on each side 3a, 3b or externally on each side, each motor 5 drives only a part - in particular a half - of adjacent rollers 4a, 4b.

With this version there are sections of the roller conveyor 4 on the front F and on the rear R which can be operated separately.

The first rollers 4a are driven by motors 5a and 5b arranged on a first side 3a, a first motor 5a rotates a respective first part of first rollers 4a proximal to the front F of the roller conveyor 4, a second motor 5b rotates a respective second part of first rollers 4a proximal to the rear R of the roller conveyor 4; the seconds 4b rollers are driven by 5c and 5d motors arranged on a second side 3b, a third motor 5c actuates in rotation a respective first part of the second rollers proximal 4b at the front F of the roller conveyor 4, a fourth 5d motor drives in rotation a respective second part of the proximal second rollers 4b of the roller 4 to the rear R.

Thanks to this configuration, the first part of first rollers 4a and the first part of second rollers 4b, proximal to the front F of the roller conveyor 4, can rotate with the same direction of rotation, and the second part of first rollers 4a and the second part of second rollers 4b, proximal to the rear R of the roller conveyor 4, can rotate with the same direction of rotation of the first part of rollers 4a, 4b, or with a direction of rotation opposite to the direction of rotation of the first part of first 4a and second 4b rollers, and also the rollers 4a, 4b of the first part can rotate differently in the direction of rotation and/or rotation speed with respect to the rollers of the second part of the roller conveyor 4.

Consider, for example, a loading unit - made up of a certain number of packages in two adjacent portions and put together front-rear - which arrives on the roller conveyor 4 according to a direction of movement A; first all the rollers 4a, 4b, of the first part and of the second part, rotate in the same rotation direction to place the loading unit in the position where it must be unloaded.

Subsequently the two parts of rollers - proximal to the front F and proximal to the rear R - can be rotated independently; two situations are possible: the rollers of the first part rotate towards the center 41 of the roller conveyor 4 as well as the rollers of the second part, in this way the two front-rear portions of the packages of the loading unit are compacted, or the rollers of the first part rotate towards the front F and the rollers of the second part rotate towards the rear R.

Furthermore, it is possible to rotate the rollers 4a, 4b of the two parts with different speeds to obtain different compaction or separation effects.

For example, the two portions of the packages of the loading unit can be separated slightly away from the center 41 and forming two detached groups of packages. Thanks to the moving movement of the two groups of packages, it is possible to center the two groups on two specific unloading positions where the respective supports can be found.

For example, the supports can be two half pallets, one half pallet being arranged substantially under the group of packages near the front F of the roller conveyor 4 and the other half pallet under the group of packages near the rear R of the roller conveyor 4.

In this case, it should be noted that the two groups of packages must be separated from each other to give each group the possibility of being centered above the respective (half) pallet on which it must be positioned, also because the group of packages could have plan dimensions smaller than the size of the pallet.

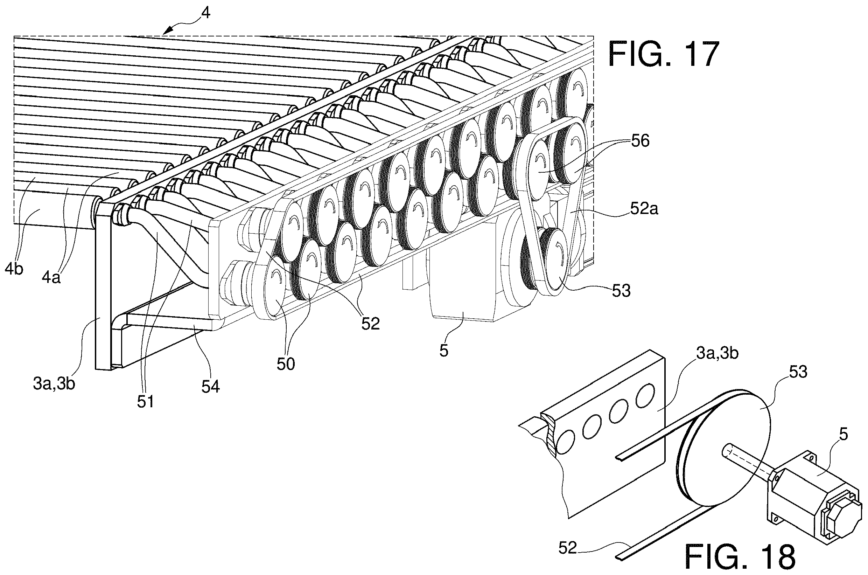

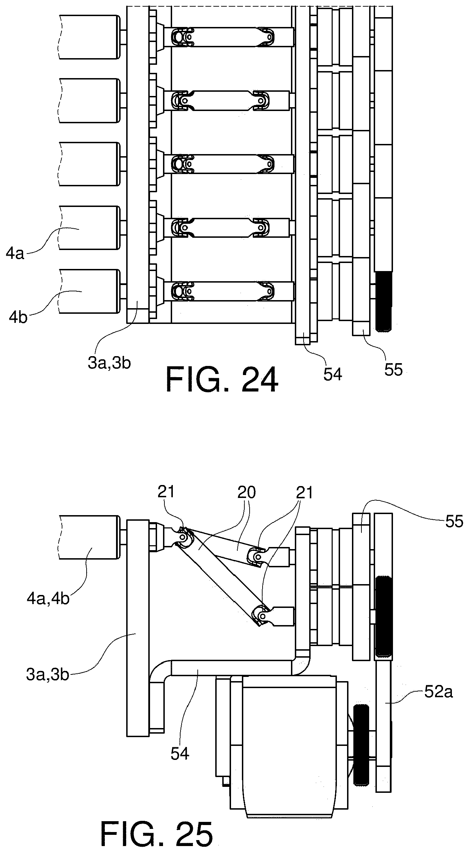

Figures 17-25 show other versions of the motion transmission to the roller conveyor 4, all characterized by the fact of providing the transmission on one of the sides 3a, or 3b, of the support structure 2.

As can be seen from figure 17, the roller conveyor 4 has relatively small diameter rollers and a pitch - or interaxis - slightly greater than the diameter of the rollers themselves, so that the arrangement of the rollers corresponds to that of the versions with the transmissions on both sides. Therefore, the diameter and the reduced pitch of the rollers is maintained, obtaining a reliable unloading of the loading unit or group of packages on the pallet or support PA.

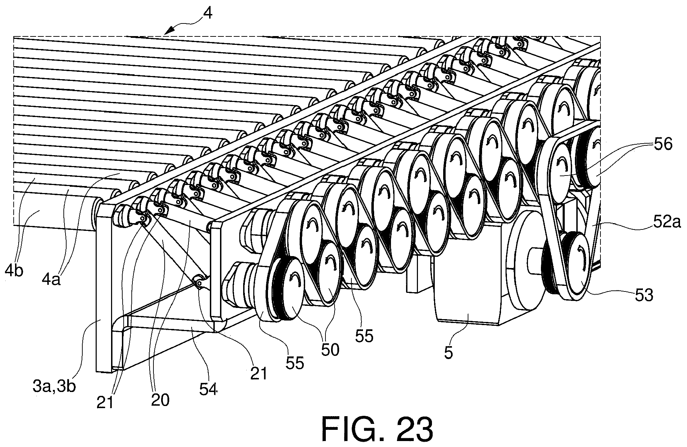

In order to apply a greater rotation torque to the rollers than would be possible by exploiting the only space available based on the pitch of the rollers, each roller is connected to a respective toothed wheel 50, or pulley, of relatively large diameter, arranged on one side 3a, or 3b, of the support structure 2, by means of a flexible transmission shaft 51 (figures 17-22), or a rigid transmission shaft 20 with two joints 21 at the two ends (figures 23-25), for example universal joints or universal constant-velocity joints.

In turn, the toothed wheels 50, or the pulleys, with a relatively large diameter, can be arranged in a convenient and useful area for limiting the overall dimensions. For example, the toothed wheels 50, or the pulleys, can be arranged staggered vertically, i.e. arranged in parallel rows offset by half a step, keeping toothed wheels 50, or the pulleys, higher at a height lower than that of the rollers and of the sides on which the loading unit or group of packages moves, so as not to create obstacles to the movement of the same loading units.

In other words, and as it is clearly visible in figures 17, 19 and 21, the toothed wheels 50, or the pulleys, are arranged in a quincunx arrangement, in which the upper row controls the first rollers 4a and the lower row controls the second rollers 4b .

Figures 17-20 illustrate a version in which the transmission takes place with a chain ring 52, or belt, of the tangential type which tangentially drives the toothed wheels 50, or the pulleys.

The motor 5 then drives the toothed wheels 50, or the pulleys, by means of a further chain ring 52a, or belt, wound on the second toothed wheels 56, or pulleys twinned with some of the toothed wheels 50, or pulleys, in a similar way as illustrated in figure 6.

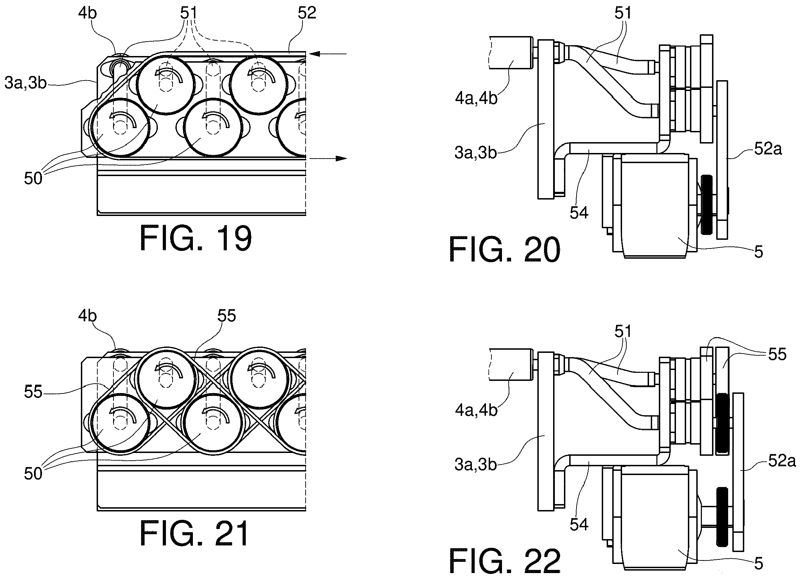

In the version shown in Figure 18, the chain 52, or belt, is in turn moved directly by means of a toothed wheel 53, or pulley, keyed onto a motor 5, or gearmotor, similar to that of the previous versions. In Figure 20, in particular, it can be observed that the toothed wheels 50, or the pulleys, are supported by a support side 54.

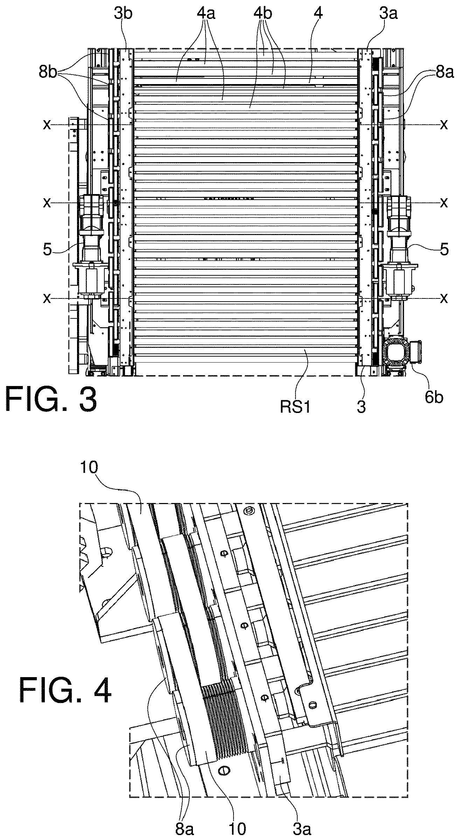

Figures 21 and 22 show a further version in which the toothed wheels 50, or the pulleys, are double and are driven in pairs by short chain links 55, or belts, staggered together, as in the version of the present invention illustrated in figures 4-6.

Figures 23-25 show yet another version equipped with rigid shafts 20 with cardan joints 21 at the ends.

In these versions, illustrated in figures 17-25, all the toothed wheels 50, or pulleys, are located on the same side of the roller conveyor 4 thus simplifying maintenance.

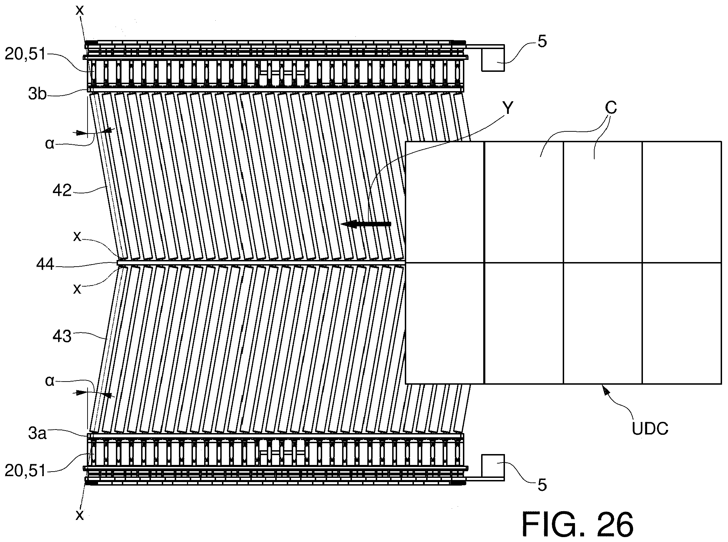

In the version illustrated in figure 26, the roller conveyor 4 comprises a longitudinal centerline 44 which divides the roller conveyor longitudinally into two parts, each part comprises a series of rollers 42, 43, each series of rollers 42, 43 has a development axis x-x, or of rotation, which is inclined, towards the centerline 44 of the roller conveyor 4 and backwards with respect to the direction of advancement Y of a group of packages C, by a small angle α with respect to the transverse direction which substantially goes from one side 3a to the other side 3b of the frame 3, this transverse direction is substantially perpendicular to the aforementioned sides 3a, 3b. For example, the angle α can be between 0 and 10 degrees and, according to another version, the angle α can be between 3 and 6 degrees.

Thanks to this arrangement, the group of packages C, that is the loading unit UDC, can advance, according to the feed direction Y, over the rollers 4 in a more regular way, without jolts, taking advantage of the fact that the inclination of the roller increases the support base of the packages on the roller and making the contact between the edge of the packages C at the base of the loading unit and the roller itself more gradual; it should also be noted that the inclination of the two series of rollers towards the center determines on the packages C a thrust component towards the center line of the roller, causing compaction of the same packages.

To drive the two series of rollers, on both sides 3a, 3b, respective drives are provided with rigid shafts 20 and universal joints, or flexible shafts 51 driven by respective motors 5 by chains or belts as in the previous versions illustrated in the figures 17-25.

According to another version of the present invention not shown in the figures, for driving the two series of rollers 4, on one of the two sides 3a, 3b there is a drive with rigid shafts 20 and universal joints, or flexible shafts 51 operated by respective motors 5 by chains or belts as in the previous versions illustrated in figures 17-25, which rotates a first series of rollers adjacent to the drive. The second set of rollers not put into rotation directly by the drive is set in rotation by the first set of rollers through a connection with a joint - universal joint, constant-velocity joint, or other equivalent type - or a short flexible shaft, i.e. each roller of the first series rotates the respective roller of the second series, through the aforementioned connection.

According to a version of the present invention, the second load support structure 6 comprises a plurality of rolling elements with a substantially cylindrical external surface or roller 6a substantially parallel to each other and with the main development axis in direction from one side 3a to the other side 3b, so as to configure a second roller conveyor lower than the first roller conveyor 4.

The rolling elements 6a can also all be of the same size and at the same level from the ground so as to define a second substantially horizontal bearing surface RS2. Generally, the rolling elements 6a have a larger diameter than the rollers 4a, 4b of the roller conveyor 4.

If rolling elements 6a are provided, the assembly 1 comprises actuator means for rotating the same rolling elements 6a. The aforesaid actuator means comprise at least an auxiliary motor 6b kinematically connected to the rolling elements 6a; the drive motors can be of any type, for example of the electric type with a gear reducer.

The group 1 can be equipped with first moving means 15 for the first supporting structure 2 and more particularly for the frame 3 with the roller 4.

In this regard, the group 1 can comprise a base frame 16 on which the frame 3 with the roller conveyor 4 is slidably mounted. The base frame 16 can support the second support group 6, if provided.

According to this version, the base frame 16 comprises lateral guides or rails 17 facing or open upwards and on which respective runners 18 are slidably mounted joined to or connected to the frame 3, in particular below it.

The first moving means 15, for example electric motors, in this case control the translation of the runners 18 along the guides 17 and therefore of the frame 3 with respect to the base frame 16.

In accordance with the non-limiting example of embodiment shown in the figures, the first moving means 15 comprise a gearmotor 22, which rotates a second shaft 23 bearing at each of its ends a toothed wheel or pinion 24 in engagement with meshing with respective rack elements 25 mounted under the frame 3 with the roller 4, more particularly each under a respective runner 18, so that by operating the gearmotor 22 the rotation of the toothed wheels 24 is determined and therefore the movement in one direction or in the other of the rack elements 25 and, with the latter, of the frame 3 bearing the roller 4, thus obtaining a desired relative displacement of the latter with respect to the pallet or support PA or, if provided, to the second support structure 6. Of course, the rack elements 25 are aligned orthogonally to the axis of the rollers 4a, 4b and parallel to the relative movement direction of the first support structure 2 with respect to the pallet or support PA.

Clearly, another type of mechanical or electronic actuation could also be provided for the displacement of the frame 3 with respect to the base frame 16.

According to a version of the present invention, second moving means 15a are provided for moving the pallet or support PA or, if provided, for moving the second support structure 6 with the pallet or support PA.

In both versions, thanks to the first and second moving means 15, 15a, which move the first support structure 2, or which move the pallet or support PA or the second support structure 6, or which move both parts 2, PA, 6, there is a reciprocal movement of one part relative to the other part; the aforementioned movement allows the transfer of the loading unit on structure 6 or on the pallet or support PA. The group 1 comprises lifting means 26 of the second support surface RS2 of the second support structure 6 from a lower position to an upper position.

In the latter upper position, the pallet or support PA on the second support structure 6 is at a predetermined unloading distance from the roller conveyor 4, i.e. from the first surface RS1, when the latter is in the respective second position.

Recall that the second position is the position in which the first support structure 2 is at least partially superimposed on the pallet or on the support PA or on the second support structure 6 bearing the respective pallet or support PA, i.e. when the second support structure 6 (or the support PA) is at least partially inside the tunnel LT and under the roller conveyor 4.

The lifting means 26 can be of any type or structure suitable for obtaining the desired vertical translation of the second surface RS2.

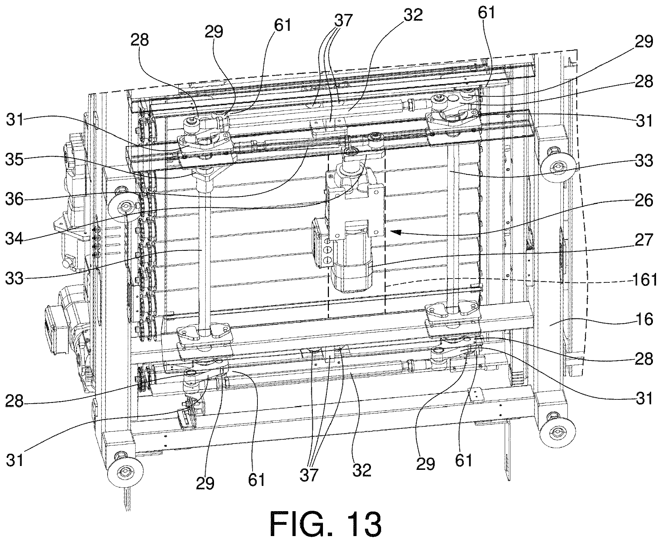

Figure 13, which is a bottom view of the second support structure 6, illustrates an example of embodiment of the lifting means 26.

The lifting means 26 comprise a gearmotor 27 fixed, by means of a plate 161, to the base frame 16, at least four rockers 28, each equipped at one end with a respective roller 29; the rockers 28 are arranged substantially at the four corners of the support structure 6 to be raised; in turn, the second support structure 6 comprises abutments 61 in a position corresponding to the end of the rockers 28 equipped with the rollers 29.

The lifting means 26 further comprise a mechanism 30 for transmitting the motion from the gearmotor 27 to the rockers 28; the mechanism 30 includes levers 31, connecting rods 32 and shafts 33 which allow synchronization of the movement of the at least four rocker arms 28, the gearmotor 27 rotates one of the shafts 33 by means of a crank mechanism which includes a first arm 34 arranged on the output shaft of the gearmotor, a second arm 35 keyed on one of the shafts 33 and a connecting bar 36 pivoted at the ends of the first arm 34 and of the second arm 35, centering means 37 are also provided to keep the first support structure 2 also centered in the presence of lateral thrusts due to the lifting means 26.

The rockers 28 varying their inclination act, through the rollers 29, on the abutments 61 which are located on the second support structure 6 and raise or lower the support structure 6 itself with respect to the base frame 16. The lifting means 26 thus they allow a lifting and lowering movement of the second support structure 6.

The vertical translation of the second surface RS2, when the pallet or support PA is on it, has the purpose of bringing the PA pallet itself as close as possible to the roller conveyor 4, so that the subsequent deposit of the loading unit on the pallet takes place by falling from a very small difference in height, even in the order of a few centimeters.

This lifting phase is useful because, in the phase in which the roller conveyor 4 passes from the first position to the second position with the loading unit resting on the first surface RS1, the pallet PA must be sufficiently far from it to avoid accidental impacts that could precisely move the pallet PA leaving it in an incorrect position and not suitable for receiving the loading unit.

According to an alternative version of the present invention, other lifting means, similar to the lifting means 26, can move the roller conveyor 4, with the relative first support surface RS1, from a lower position to an upper position and vice versa. According to yet another version of the present invention, the lifting means 26 can move both the roller conveyor 4 and the second support structure 6.

The group 1 can be part of a plant comprising means for feeding a loading unit or group of packages of products on the first support structure 2 or on the roller conveyor 4 of the same, for subsequent loading on the second support structure 6.

In this regard, the loading unit or group of packages of products arrives on the feeding means typically transported by a mobile motorized vehicle within a production plant, for example an automatic or other type of guided vehicle.

The plant can also include at least one unit or device for the output of the pallet, supporting the respective loading unit or group of product packages deposited on it. The output unit has the function of transferring the pallet 6, carrying the respective loading unit, to subsequent production stations, such as for example a loading unit winding station with a polymeric film, or other packaging material.

The sides can be added to the group on two or more sides to avoid unwanted movement of the packages in cases of greater instability.

The control group 7 can control and suitably vary the speeds of the rollers 4a, 4b of the roller conveyor and the relative speed between the rollers 4a, 4b and the pallet or support PA or the second support surface RS2. By suitably varying these speeds, it is possible both to deposit the loading unit on the support PA without moving inside the loading unit itself, and to obtain a compacting or expansion effect of the loading unit in the direction parallel to that of relative movement between the roller conveyor 4 and PA pallets.

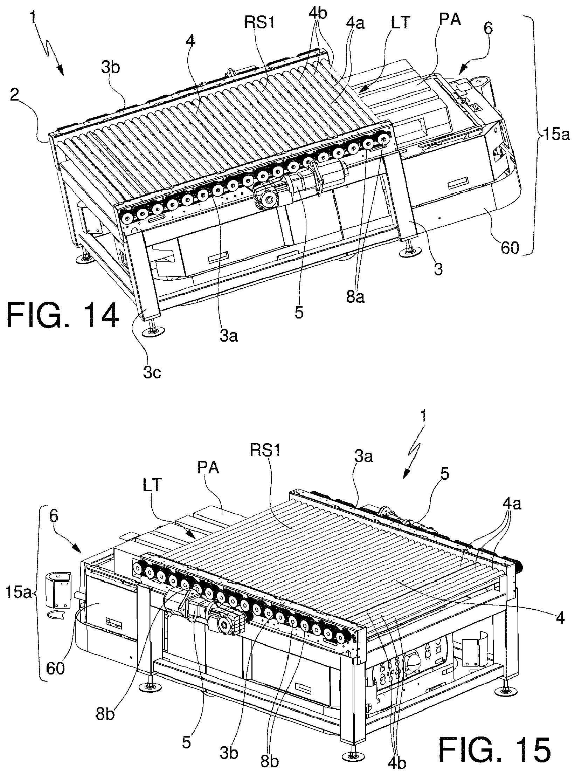

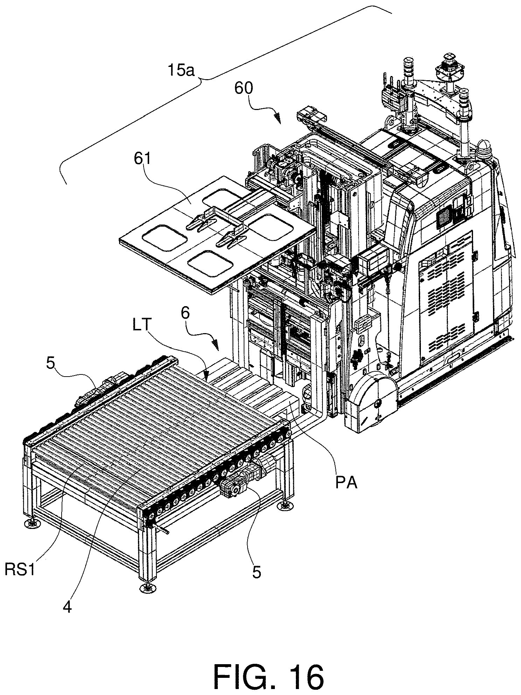

With reference now to the embodiments of Figures 14-16, in the second support group 6 the second moving means 15a comprise at least one handling means 60 for moving the pallet or support PA during insertion/extraction within or from the lower tunnel LT. The handling means 60 can be a manually or automatically guided lift truck (Figure 16).

In accordance with this version, the second support group 6 is therefore not fixed, but comprises a vehicle or similar, i.e. the at least one handling means 60, defining the second support surface RS2 upwards. Always according to this version, the frame 3 is fixed and supported by respective legs 3c which rest on the ground.

In accordance with the present invention, the transfer of loads between the first support structure 2 and the pallet PA, and on the second support structure 6, i.e. the handling means 60, can take place in different ways, for example the two indicated ways below.

In both modes, at the beginning of the transfer, the pallet or the support PA placed on the handling means 60 - which is included in the second support structure 6 - and is located under the roller conveyor 4 and in particular in the tunnel LT, while the load or loading unit to be transferred will be placed above the roller conveyor 4. Subsequently, the support or pallet PA can be kept stationary with respect to the second support structure 6 (if provided) and the first support structure 2 can be moved or vice versa.

As mentioned above, it is also possible to provide a solution in which both the first support structure 2, and the second support structure 6, can be moved relative to each other reciprocally.

If the pallet PA, with the second support structure 6, is kept stationary, then the roller conveyor 4 is moved by the first moving means 15 along the direction orthogonal to the axis of the rollers 4a, 4b. The roller conveyor 4 is moved linearly with a speed equal to and in the opposite direction to that at which the rollers 4a, 4b, suitably driven in rotation by the motors 5, move the loading unit. Thanks to this arrangement, the loading unit remains substantially in the same vertical position so that the roller conveyor 4 moves linearly and the loading unit is gradually placed on the PA pallet.

If, on the other hand, the roller conveyor 4 is kept linearly stationary, then the second support structure 6 is moved by means of the second moving means 15a along a direction orthogonal to the axis of the rollers 4a, 4b and in the same direction with respect to the direction in which it must be moved the loading unit on the PA pallet. In this case, for example, the second support structure 6 can be moved with an equal linear speed and in the same direction as that to which the rollers 4a, 4b, suitably driven in rotation by the motors 5, move the loading unit; in doing so, the loading unit remains substantially at the same relative distance from the support structure 6 during the transfer of the loading unit.

Clearly, the first 2 and the second support structure 6 could also be moved simultaneously.

Figure 16 illustrates another version of the handling means 60 comprising an automatic guided vehicle, for example a laser guided vehicle or LGV, also comprising a presser 61 to promote the stability of the packages during transfers. The present invention corresponds to a particular group or device that allows both to move the loading unit, and to deposit it on a pallet or support, of any type, and also to deposit loading units on another loading unit.

The construction and operational characteristics of group 1 according to the present invention guarantee the use without limitations regarding weights, dimensions, palletizing scheme and characteristics of the packages or loading units treated.

In particular, the support structure 2 and the frame 3 with the roller conveyor 4 are solidly built, with a bridge shape entirely supported in the area of the two sides 3a, 3b, so as to avoid cantilever structures that would not be able to withstand high loads and that could bend making it impossible to correctly transfer the packages. The group 1 consists of a roller conveyor with rollers having a diameter and therefore a step between the small rollers in order to decrease or eliminate, as already indicated, both the jolts of the loading units during movement, and instability or jamming between the packages during the deposit of the loading units on the pallet or support PA.

The reduced dimensions of the rollers and therefore of the pitch between the rollers 4a, 4b allow for example to treat loading units with small palletized packages also with a columnar arrangement, typically unstable, without the use of interlayer, glue or other stabilizing elements.

As will be understood, the loading units can be either palletized directly on the roller conveyor or can be transferred already palletized coming from a suitable conveyor.

If two motors were provided on each side as indicated above, it would be possible to treat loading units associated with supports, for example consisting of pairs of half pallets - pallets which for example have dimensions of 800x600 mm. or 1000x600 mm. - allowing the portion of the loading unit associated with each half pallet to be deposited during the same operation, but with greater flexibility than traditional systems, being able to independently manage the movement of the rollers of each section of roller conveyor.

This also allows you to position a portion of the loading unit intended for a half pallet centered with respect to the half pallet itself or the portion of the loading unit can be aligned inwards or outwards of the half pallet.

Each of these different types of positioning can lead to different behaviors depending on the subsequent treatment of the loading unit on pallets. This version of the transfer group allows to manage this feature flexibly by choosing the most advantageous one, depending on the situation.

Changes and variations of the invention are possible within the scope of protection defined by the claims.

## Claims

1. Group (1) for transferring loads comprising:
a first support structure (2) with a main frame (3), provided with a first side (3a) and a second side (3b), with a roller conveyor (4) including a plurality of rollers (4a, 4b; 42, 43) substantially parallel to each other and with a predetermined main development axis (x-x), said rollers (4a, 4b) having ends supported rotatable by said sides (3a, 3b) of said frame (3), so that under said plurality of rollers (4a, 4b; 42, 43) a lower tunnel (LT) is defined, said first support structure (2) having a bridge shape entirely supported in the area of the two sides (3a, 3b),
roller drive means comprising at least one motor (5) kinematically connected to said rollers (4a, 4b; 42, 43),
a second structure (6) or a pallet or a support (PA) for loads, and
a control group (7) of said drive means (5),
**characterized in that**
said first support structure (2) comprises first moving means (15) for moving said first support structure (2) and/or
said second structure (6), or said a pallet, or said a support (PA) for the loads, comprises second moving means (15a) for moving the second support structure (6), or said pallet, or said support (PA),
whereby said first support structure (2) and/or said second support structure (6), or said pallet or support (PA), can be moved relative to each other so as to determine the insertion or the extraction of said second support structure (6), or said pallet or support (PA), in or from said lower tunnel (LT) for the transfer of loads between them (2, 6, PA).

2. Group (1) according to claim 1, wherein said group comprises motion transmission means from said drive means (5) to said rollers (4a, 4b; 42, 43), said motion transmission means including a plurality of pulleys or toothed wheels (8a, 8b; 50) each keyed with a respective roller (4a, 4b; 42, 43) and mounted rotatably outside the positioning area of the rollers (4a, 4b) around a rotation axis corresponding to that of the respective roller (4a, 4b; 42, 43) and designed to transmit the motion to the latter by said at least one motor (5).

3. Group (1) according to the previous claim, comprising a first plurality of pulleys (8a) mounted on said first side (3a) of the frame (3) to rotate a respective first plurality of rollers (4a) and a second plurality of pulleys (8b) mounted on said second side (3b) of the frame (3) to rotate a respective second plurality of rollers (4b), the rollers of said first plurality (4a) being alternated with the rollers of said second plurality (4b), that is, next to the rollers of said first plurality of rollers (4a) there are one or two rollers of the second plurality of rollers (4b) and vice versa.

4. Group (1) according to claim 2 or 3, wherein said drive means comprise at least two motors (5) each arranged either at or on or outside a respective side (3a, 3b) of the frame (3) different from the other side, each motor (5) being kinematically connected to a plurality of rollers between said first (4a) plurality of rollers and said second (4b) plurality of rollers, so that each roller (4a, 4b) is moved by only one of said at least two motors (5).

5. Group (1) according to claim 2, comprising a plurality of toothed wheels (50), or pulleys, positioned on only one of the sides (3a, 3b) said first support structure (2), each toothed wheel (50), or pulley, being connected to a respective first roller (4a), or to a respective second roller (4b) by means of a flexible transmission shaft (51), or a rigid transmission shaft (20) with two joints (21) at the two ends.

6. Group (1) according to one of claims 2 to 5, wherein each pulley or toothed wheel (8a, 8b; 50) has a larger diameter or external section than a respective roller (4a, 4b) connected to it.

7. Group (1) according to any one of the preceding claims, wherein the rollers are kinematically connected two by two by means of respective belts or chains (10; 55), and wherein on at least one pulley or toothed wheel (8a, 8b; 50) two belts or chains closed in a ring (10; 55) are wound and offset from each other, one belt transferring the motion to this pulley (8a, 8b; 55) and the other belt being driven by it and transferring the motion to it imparted to an adjacent pulley (8a, 8b; 50).

8. Group (1) according to claim 5 or 6, wherein each toothed wheel (50), or pulley, is kinematically connected by a chain (52), or belt, of a tangential type to a toothed wheel (53), or pulley, keyed onto said motor (5), or gearmotor, or are kinematically connected to said motor (5), or gearmotor, by means of a further chain ring (52a), or belt, wound on second toothed wheels (56), or pulleys, twinned with some of said toothed wheels (50), or pulleys.

9. Group (1) according to any one of the preceding claims, wherein said roller conveyor (4) comprises a longitudinal centerline (44) which divides the roller conveyor longitudinally into two parts, each part comprises a series of rollers (42, 43), each series of rollers (42, 43) having an axis of development x-x, or of rotation, which is inclined towards said centerline (44) of said roller conveyor (4) and backwards with respect to the direction of advancement Y of a group of packages (C), by a small angle (α) with respect to the transverse direction which substantially goes from one side (3a) to the other side (3b) of the frame (3), said transverse direction being substantially perpendicular to the aforementioned sides (3a, 3b).

10. Group (1) according to any one of the preceding claims, wherein said second moving means (15a) comprise at least one handling means (60) of said pallet or support (PA) in insertion/extraction within/from said lower tunnel (LT).

11. Group (1) according to the preceding claim, wherein said at least one handling means (60) is a manually or automatically guided lift truck.

12. Group (1) according to any one of the preceding claims, comprising a base frame (16) on which the frame (3) with the roller conveyor (4) is slidably mounted, and wherein said base frame (16) comprises guides or rails (17) facing or open upwards on which respective runners (18) are slidably mounted, integral with or connected to the frame (3), and said first moving means (15) being adapted to control the translation of the runners (18) along the guides (17) and therefore of the frame (3) with respect to the base frame (16).

13. Group (1) according to any one of the preceding claims, wherein said drive means comprise two or more motors (5a, 5b, 5c, 5d), each motor (5a-5d) operating only a part of adjacent rollers (4a, 4b), so that a first or a third motor (5a, 5c) rotates a respective part of said rollers (4a, 4b) adjacent to each other and proximal to the front (F) of the group (1) with an opposite direction of rotation, or in a different way for the direction of rotation and/or rotation speed, with respect to the direction and/or rotation speed of the other part of rollers (4a, 4b) proximal to the rear (R) of the group and controlled by a second or a fourth motor (5b, 5d) and in such a way that the rotation of the part of rollers driven by the first or third motor (5a, 5c) is such as to push loads on this part of rollers towards the front (F), or from the front (F), of the group (1) and that the rotation of the part of rollers (4a) driven by the second or fourth motor (5b, 5d) is such as to push loads on this part of rollers (4a) towards the rear (R), or from the rear (R), of the group (1).

14. Group (1) according to any one of the preceding claims, comprising lifting means (26) for the second support surface (RS2) of the second support structure (6) for moving said second structure (6), or said pallet or support (PA), from a lower position to an upper position and vice versa.

15. Group (1) according to any one of the preceding claims, comprising lifting means (26) for moving said roller conveyor (4), with the relative first support surface (RS1), from a lower position to an upper position and vice versa.

16. Method for transferring loads from a first support structure to a second support structure, comprising a group (1) according to one of the preceding claims, comprising the following steps:
place said pallet or support (PA) under said roller conveyor (4), while a loading unit to be transferred is arranged above the roller conveyor (4),
**characterized in that** it comprises
rotating the rollers (4a, 4b) and moving relatively said first support structure (2) and said second support structure (6), or said support or pallet (PA), so that the loading unit is gradually deposited on said second support structure (6), or said support or pallet (PA).

17. Method according to the preceding claim, wherein said step of relative displacement between first support structure (2) and said second support structure (6), or said support or pallet (PA), comprises keeping said second support structure (6) still, or said support or pallet (PA), and moving, by means of the first moving means (15), said roller conveyor (4) according to a direction orthogonal to the axis (x-x) of the rollers (4a, 4b) and in opposite to that in which the loading unit on the pallet or support (PA) must be moved, so that the roller conveyor (4) is moved linearly with a speed equal to and opposite to that at which the rollers (4a, 4b), suitably driven in rotation by said at least one motor (5), move the loading unit.

18. Method according to claim 16, wherein said step of relative displacement between the first support structure (2) and said second structure (6), or said pallet or support (PA), comprises keeping said roller conveyor (4) linearly stationary and moving, by means of second moving means (15a), said second structure (6), or said pallet or support (PA), according to a direction orthogonal to the axis (x-x) of the rollers (4a, 4b) and in the same direction with respect to the one in which the loading unit must be moved on said second structure (6), or said pallet or support (PA).

19. Method according to the preceding claim, wherein said step of moving said second structure (6), or said pallet or support (PA), comprises moving with an equal linear speed and in the same direction as that at which the rollers (4a, 4b) move the loading unit, said rollers (4a, 4b) being suitably driven in rotation by said at least one motor (5).

20. Method according to the preceding claim, wherein said step of driving the rollers (4a, 4b) comprises operating only a part of adjacent rollers (4a, 4b), by means of two or more motors (5a-5d) arranged on each side or externally each side (3a, 3b) of the frame (3), so that a respective first part of first rollers (4a) adjacent to each other and proximal to the front (F) is driven in rotation by a first motor (5a) with a direction of rotation opposite to the direction of rotation of the other or second part of the first rollers (4a) proximal to the rear (R) of the group (1), in turn driven by a second motor (5b), and so that the rotation of the part of first rollers (4a) driven by the first motor (5a) pushes the loads on this part of first rollers towards the front (F), or from the front (F), of the group (1) and that the rotation of the second part of first rollers (4a), driven by the second motor (5b), push the loads on this second part of the first rollers (4a) towards the rear (R), or from the rear (R), of the group (1), and
a respective first part of second rollers (4b) adjacent to each other and proximal to the front (F) of the group (1) is driven in rotation by a third motor (5c), with a direction of rotation opposite to the direction of rotation of the other or second part of the second rollers (4b) proximal to the rear (R) of the group (1), driven by the fourth motor (5d), so that the rotation of the first part of second rollers driven by the third motor (5c) pushes the loads on this part of second rollers (4b) towards the front (F), or from the front (F), of the group (1) and that the rotation of the second part of second rollers (4b), driven by the fourth motor (5d), pushes the loads on this second part of the first rollers towards the rear (R), or from the rear (R), of the group (1).
